# EUROPEAN PATENT APPLICATION

(11) **EP 2 479 924 A1**
(43) Date of publication of application: **25.07.2012**
(21) Application number: 12000130.0
(22) Date of filing: 11.01.2012
(51) Int. Cl.: H04L 12/10

(54) **Method and system for self-adapting dynamic power reduction mechanism for physical layer devices in packet data networks**

(30) Priority: 20.01.2011 US 201113434801; 13.04.2011 US 201113085861
(71) Applicant: Broadcom Corporation, Irvine, CA 92617 (US)
(72) Inventor: Mehmet, Tazebay, 92614 Irvine CA (US); Scott, Powell, 92656 Alisa Vieji CA (US)
(74) Representative: Jehle, Volker Armin

(57) **Abstract**

A physical layer (PHY) in a network device may provide self-adapting power reduction based on monitoring of activity associated with an interface between the PHY and remaining components of the network device. The power management operations of the PHY may then be configured and/or adjusted based on that monitoring. The PHY may comprise an Ethernet PHY, which may support energy efficient Ethernet (EEE) features. The monitored interface may comprise a Media Independent Interface (MII) based interface. In instances where the monitored activity comprises outbound traffic, outbound data received via the interface may be buffered when at least one subcomponent of the PHY that is operable to support transmission of the outbound traffic is unavailable due to the power management operations. The buffering may be configured to last to allow sufficient time to reactivate the at least one subcomponent.

## Description

### CLAIM OF PRIORITY

This patent application makes reference to, claims priority to and claims benefit from United States Provisional Application Serial No. 61/434,801 (Attorney Docket No. 24116US01) which was filed on January 20, 2011.

The above stated application is hereby incorporated herein by reference in its entirety.

### CROSS-REFERENCE TO RELATED APPLICATIONS/INCORPORATION BY REFERENCE

This application makes reference to:
Unites States Patent Application 12/470,970 filed on May 22, 2009;
Unites States Patent Application 12/480,658 filed on June 8, 2009; and
Unites States Patent Application 12/490,209 filed on June 23, 2009.

Each of the above stated applications is hereby incorporated herein by reference in its entirety.

### FEDERALLY SPONSORED RESEARCH OR DEVELOPMENT

[Not Applicable].

### [MICROFICHE/COPYRIGHT REFERENCE]

[Not Applicable].

### FIELD OF THE INVENTION

Certain embodiments of the invention relate to networking. More specifically, certain embodiments of the invention relate to a method and system for self-adapting dynamic power reduction mechanism for physical layer devices in packet data networks.

### BACKGROUND OF THE INVENTION

With the increasing popularity of electronics such as desktop computers, laptop computers, and handheld devices such as smart phones and PDA's, communication networks, and in particular Ethernet networks, are becoming an increasingly popular means of exchanging data of various types, sizes for a variety of applications. In this regard, Ethernet networks are increasingly being utilized to carry, for example, voice, data, and multimedia. In this regard, people are relying more and more on the Internet and associated protocols such as Ethernet for the delivery of real-time and/or high quality content and/or information. However, delivery of such time-sensitive information creates a serious burden on networks and network designers.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for self-adapting dynamic power reduction mechanism for physical layer devices in packet data networks, substantially as shown in and/or described in connection with at least one of the figures, as set forth more completely in the claims. According to an aspect, a method is provided, comprising:
in a network device:
   monitoring traffic activity associated with an interface between a PHY component of said network device and remaining components of said network device, wherein said traffic activity comprises inbound and/or outbound traffic;
   and
   configuring power management operations of said PHY component based on said monitoring.
   Advantageously, said PHY is an Ethernet PHY.
   Advantageously, said Ethernet PHY supports energy efficient Ethernet (EEE) operations.
   Advantageously, said interface comprises a Media Independent Interface (MII) based interface.
   Advantageously, the method further comprises determining when outbound traffic is received via said interface, whether at least one subcomponent of said PHY component is unavailable due to said power management operations, said at least one subcomponent of said PHY component being operable to support transmission of said outbound traffic.
   Advantageously, the method further comprises buffering at least a portion of said outbound traffic when said at least one subcomponent of said PHY component is unavailable to enable activating said at least one subcomponent of said PHY component.
   Advantageously, the method further comprises transitioning one or more of a plurality of subcomponents of said PHY component to one or more power saving modes during power management operations.
   Advantageously, the method further comprises triggering said transitions to said one or more power saving modes based on a plurality of transition criteria, wherein said transition criteria comprises expiry of at least one configurable timer.
   Advantageously, the method further comprises modifying power related parameters and/or settings associated with one or more of a plurality of subcomponents of said PHY component.
   Advantageously, said modifying of power related configuration comprises shutting down and/or reducing activity of at least a portion of said one or more of said plurality of subcomponents of said PHY component.
   According to an aspect, a system is provided, comprising:
      one or more circuits for use in a network device, said one or more circuits being operable to:
         monitor traffic activity associated with an interface between a PHY component of said network device and remaining components of said network device, wherein said traffic activity comprises inbound and/or outbound traffic;
         and
         configure power management operations of said PHY component based on said monitoring.
      Advantageously, the PHY is an Ethernet PHY.
   Advantageously, said Ethernet PHY supports energy efficient Ethernet (EEE) operations.
   Advantageously, said interface comprises a Media Independent Interface (MII) based interface.
   Advantageously, said one or more circuits are operable to determine when outbound traffic is received via said interface, whether at least one subcomponent of said PHY component is unavailable due to said power management operations, said at least one subcomponent of said PHY component being operable to support transmission of said outbound traffic.
   Advantageously, said one or more circuits are operable to buffer at least a portion of said outbound traffic when said at least one subcomponent of said PHY component is unavailable to enable activating said at least one subcomponent of said PHY component.
   Advantageously, said one or more circuits are operable to transition one or more of a plurality of subcomponents of said PHY component to one or more power saving modes during power management operations.
   Advantageously, said one or more circuits are operable to trigger said transitions to said one or more power saving modes based on a plurality of transition criteria, wherein said transition criteria comprises expiry of at least one configurable timer.
   Advantageously, said one or more circuits are operable to modify power related parameters and/or settings associated with one or more of a plurality of subcomponents of said PHY component.
   Advantageously, said modifying of power related configuration comprises shutting down and/or reducing activity of at least a portion of said one or more of said plurality of subcomponents of said PHY component.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary Ethernet connection between two network devices, in accordance with an embodiment of the invention.

FIG. 2 is a block diagram illustrating an exemplary network device that may support self-adapting dynamic power reduction in physical layer (PHY), in accordance with an embodiment of the invention.

FIG. 3A is a block diagram illustrating an exemplary networking architecture in network device that is operable to provide self-adapting dynamic power reduction asymmetrically in physical layer (PHY) component, in accordance with an embodiment of the invention.

FIG. 3B is a block diagram illustrating an exemplary interface input controller, in accordance with an embodiment of the invention.

FIG. 4 is a flow chart that illustrates exemplary transmit (Tx) based power control policy for use during self-adapting dynamic power reduction servicing in a physical layer (PHY), in accordance with an embodiment of the invention.

FIG. 5 is a flow chart that illustrates exemplary steps for handling data transmission in a physical layer (PHY) when a self-adapting dynamic power reduction is performed by the PHY, in accordance with an embodiment of the invention.

### DETAILED DESCRIPTION OF THE INVENTION

Certain embodiments of the invention may be found in a method and system for self-adapting dynamic power reduction mechanism for physical layer devices in packet data networks. In various embodiments of the invention, a physical layer (PHY) in a network device may provide self-adapting power reduction based on monitoring of activity associated with an interface between the PHY and remaining components of the network device. The power management operations of the PHY may then be configured and/or adjusted based on that monitoring. The PHY may comprise an Ethernet PHY, which may be operable to support energy efficient Ethernet (EEE) features. The monitored interface may comprise a Media Independent Interface (MII) based interface. In instances where the monitored activity comprises outbound traffic, outbound data, which is received for transmission, via the interface may be buffered when at least one subcomponent of the PHY that is operable to support transmission of the outbound traffic is unavailable due to the power management operations. The buffering may be configured to last for a sufficient time that to allow the at least one subcomponent to be activated or reactivated. The power management may comprise transitioning one or more of a plurality of subcomponents of the PHY to one or more power saving modes. The transitions to the power saving modes may be triggered based on a plurality of transition criteria, which may comprise of a timer or a counter that tracks idle periods during communication activity associated with the PHY. The power management may also comprise modifying power related parameters and/or settings associated with one or more of a plurality of subcomponents of the PHY. The modification may comprise modifying power related configuration comprises shutting down and/or reducing activity of at least a portion of the one or more of the plurality of subcomponents of the PHY.

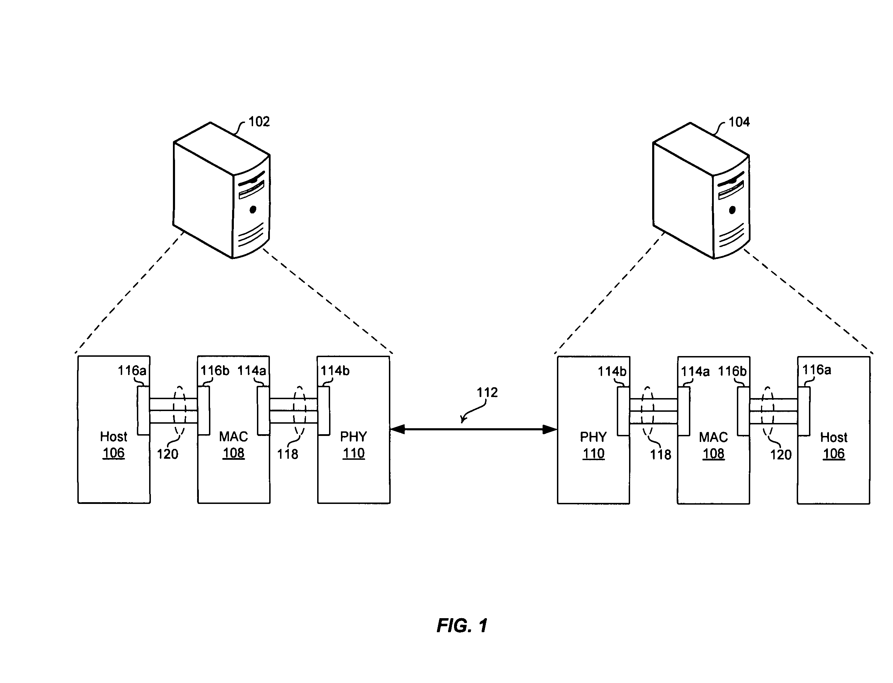

FIG. 1 is a block diagram illustrating an exemplary Ethernet connection between a two network devices, in accordance with an embodiment of the invention. Referring to FIG. 1, there are shown network devices 102 and 104.

The network devices 102 and 104 may each comprise suitable logic, circuitry, interfaces, and/or code for support network communication, which may comprise receiving, transmitting, and/or processing of network traffic, to facilitate network access operations in conjunction with applications or tasks performed therein. In this regard, network devices 102 and 104 may be link partners that communicate via link 112, which may comprise an Ethernet based link. Each of the network devices 102 and 104 may comprise, for example, a desktop computer, a laptop computer, a server, a mainframe, a switch, a router, a bridge, a network printer, a dedicated storage device, or an audio/video (A/V) enabled equipment. In this regard, AN equipment may, for example, comprise a microphone, an instrument, a sound board, a sound card, a video camera, a media player, a graphics card, or other audio and/or video devices. Accordingly, the network devices 102 and 104 may be operable to provide guaranteed quality of service (QoS) by utilizing protocols such as IEEE 1588 and/or the Audio Video Bridging (AVB) suite of protocols (e.g. IEEE 802.1AS) for the exchange of multimedia content and associated control and/or auxiliary data. The network devices 102 and 104 may each comprise a host 106, a media access control (MAC) controller 108, and a PHY component 110. The hosts 106 may be communicatively coupled to the MAC controllers 108 via interfaces 116a and 116b. The MAC controllers 108 may be communicatively coupled to the PHY 110 via interfaces 114a and 114b.

The hosts 106 may each comprise suitable logic, circuitry, interfaces, and/or code that may enable operability and/or functionality of higher layers of the OSI model, such as layers 7 through 3, or internet, transport, and/or application layers of the TCP/IP model, for packets received and/or to-be-transmitted over the link 112. The hosts 106 may each comprise, for example, one or more processing subsystems, one or more memory or storage subsystems, one or more graphics subsystems, one or more audio subsystems, and one or data buses. The hosts 106 may comprise an interface 116a for communicating with a MAC controller 108 via a bus 120. The data bus 120 may, for example, be a PCI or PCI-X bus.

The MAC controllers 108 may comprise suitable logic, circuitry, interfaces, and/or code that may enable handling of OSI data link layer, or TCP/IP network access layer, operability and/or functionality. The MAC controllers 108 may, for example, be configured to implement Ethernet protocols, such as those based on the IEEE 802.3 standard, for example. Since each layer in the OSI and TCP/IP models provides a service to the immediately higher interfacing layer, the MAC controllers 108 may provide the necessary services to the hosts 106 to ensure that packets are suitably formatted and communicated to the PHY components 110. The MAC controllers 108 may each comprise an interface 116b for communicating with a host 106 via the bus 120. Also, the MAC controllers 108 may comprise one or more memory elements for queuing received data and/or to-be-transmitted data.

Each of the MAC controllers 108 may also comprise an interface 114a for communicating with a PHY components 110 via a bus 118. The interface 114a may be, for example, a multi-rate capable interface and/or media independent interface (xxMII), where "xxMII" may correspond to, for example, MII, GMII, RGMII, SGMII, XGMII, SXGMII, and/or QSGMII. The interface 114a may enable transmission and/or reception of one or more data signals and one or more clock signals over the bus 118.

The PHY components 110 may each comprise suitable logic, circuitry, interfaces, and/or code that may enable communication, for example, transmission and reception of data, between the network device 102 and the network device 104. The PHY components 110 may also be operable to implement one or more energy efficient networking (EEN) features. Each of the PHY components 110 may comprise an interface 114b for communicating with a MAC controller 108 via the bus 118. The interface 114b may be, for example, a multi-rate capable interface and/or media independent interface (MII). The interface 114b may enable transmission and/or reception of one or more data signals and one or more clock signals over the bus 118. Also, the PHY components 110 may comprise one or more memory elements for queuing received data and/or to-be-transmitted data. In this manner, the PHY components 110 may be operable to implement EEN features even when coupled to a legacy MAC that does not support or is unaware of the EEN features, as is described in United States Patent Application 12/470,970 entitled "Method and System for Control of Energy Efficiency and Associated Policies in a Physical Layer Device," referenced above.

The PHY components 110 may enable communication between the network device 102 and the network device 104, via Ethernet based communications for example. The PHY components 110 may each comprise a twisted pair PHY capable of operating at one or more standard rates such as 10Mbps, 100Mbps, 1Gbps, and 10Gbps (10BASE-T, 100GBASE-Tx, 1GBASE-T, and/or 10GBASE-T); potentially standardized rates such as 40Gbps and 100Gbps; and/or non-standard rates such as 2.5Gbps and 5Gbps. The PHY components 110 may each comprise a backplane PHY capable of operating at one or more standard rates such as 10Gbps (10GBASE-KX4 and/or 10GBASE-KR); and/or non-standard rates such as 2.5Gbps and 5Gbps. The PHY components 110 may each comprise an optical PHY capable of operating at one or more standard rates such as 10Mbps, 100Mbps, 1Gbps, and 10Gbps; potentially standardized rates such as 40Gbps and 100Gbps; and/or non-standardized rates such as 2.5Gbps and 5Gbps. In this regard, the optical PHY may be a passive optical network (PON) PHY. The PHY components 110 may each support multi-lane topologies such as 40Gbps CR4, ER4, KR4; 100Gbps CR10, SR10 and/or 10Gbps LX4 and CX4. Also, serial electrical and copper single channel technologies such as KX, KR, SR, LR, LRM, SX, LX, CX, BX10, and LX10 may be supported. The PHY components 110 may support point-to-point protocols and/or point-to-multi-point protocols. Non-standard speeds and non-standard technologies, for example, single channel, two channel or four channels may also be supported. More over, TDM technologies such as PON at various speeds may be supported by each of the PHY components 110. The PHY components 110 may also comprise suitable logic, circuitry, and/or code operable to implement MACSec protocols.

Each of the PHY components 110 may be operable to implement one or more EEN features, such as low power idle (LPI) or sub-rating in accordance with an EEN control policy. In this regard, hardware, software, and/or firmware residing in each of the PHY components 110 may be operable to implement, or assist with implementing, an EEN control policy. LPI may generally refer a family of EEN features where, instead of transmitting conventional IDLE symbols during periods of inactivity, the PHY 110 may remain silent and/or communicate signals other than conventional IDLE symbols during periods in which there is no data to be communicated. Sub-rating may generally refer to a family of EEN features where the PHY components 110 are reconfigurable, in real-time or near real-time, to communicate at different data rates. One example of sub-rating is subset PHY where the data rate of an Ethernet link may be controlled by enabling and disabling one or more channels of the Ethernet link. The EEN technique(s) may be implemented based on the control policy in order to balance the tradeoff between performance and power consumption in the PHY components 110, the interfaces 114 and 116, and/or on the link 112. In this regard, an EEN control policy associated with a PHY 110 may control which mode the PHY 100 operates in based on various factors and/or conditions.

The link 112 is not limited to any specific medium. Exemplary link 112 media may comprise copper, optical and/or backplane technologies. For example, a copper medium such as STP, Cat3, Cat 5, Cat 5e, Cat 6, Cat 7 and/or Cat 7a as well as ISO nomenclature variants may be utilized. Additionally, copper media technologies such as InfiniBand, Ribbon, and backplane may be utilized. With regard to optical media for the link 112, single mode fiber as well as multi-mode fiber may be utilized. The link 112 may comprise up to four or more physical channels, each of which may, for example, comprise an unshielded twisted pair (UTP). The network device 102 and the network device 104 may communicate via two or more physical channels comprising the link 112. For example, Ethernet over twisted pair standards 10BASE-T and 100BASE-Tx may utilize two pairs of UTP while Ethernet over twisted pair standards 1000BASE-T and 10GBASE-T may utilize four pairs of UTP. In this regard, however, the number of physical channels via which data is communicated may vary. The link 112 may also comprise one or more wireless links utilizing protocols such as the IEEE 802.11 family of standards.

In operation, the network devices 102 and 104 may be operable to communicate, via link 112, for example. In this regard, the network devices 102 and 104 may be operable to transmit and/or receive Ethernet based packets over link 112. For example, the packets may be formatted in accordance with the seven-layer Open Systems Interconnection (OSI) model. The network devices 102 and 104 may implement, for example, UDP/IP and/or TCP/IP stacks for use in generating transmitted traffic packets and/or in receiving and handling received traffic packets. In this regard, the PHY components 110 may provide OSI layer 1, or physical layer (PHY) related functions and/or operations in the network devices 102 and 104, and the MAC controllers 108 may provide layer 2, or media access control (MAC) layer, related functions and/or operations in the network devices 102 and 104. The remaining higher OSI layers, comprising layers 3 through 7, may be provided via the hosts 106.

In an exemplary aspect of the invention, the network devices 102 and 104 may implement and/or support use of various energy efficient networking (EEN) features, which may comprise and expand on Energy Efficient Ethernet (EEE) functions as defined by the IEEE 802.3az standard. Energy Efficient Ethernet (EEE) technology is an emerging technology, representing a fundamental change in Ethernet based communications by reducing energy consumption during periods of low link utilization. In this regard, EEE features may be constructed and/or implemented based on Low Power Idle (LPI) techniques, where active transceiver power may be minimized by turning off digital and/or analog circuits and/or operations, such as based on periodic refresh cycles following quiet periods for example. LPI control signaling may be performed via interface of the PHY that is being slaved to higher layers of the network, based on asynchronous handshake mechanisms. In this regard, LPI requires implementing handshaking mechanism between two transceivers (PHY components 110) corresponding to the link peers (devices 102 and 104) in order to tolerate and/or coordinate no transmission (QUIET) periods, where no signals are being exchanged, and transitioning rapidly back to active states when traffic is detected. Energy efficient networking (EEN) features may enable implement EEE functions adaptively, in a manner that account for specific characteristics of the network devices. For example, in instances where one of the network devices 102 and 104 may be a multimedia client that transmits large amounts of data but receives very little. An EEN policy implemented in such a network device may configure logic, circuitry, and/or code associated with data reception into a low(er)-energy, high(er)-latency mode of operation, but at the same time configure logic, circuitry, and/or code associated with data transmission in a high(er)-energy, low(er)-latency mode of operation.

Energy Efficient Ethernet (EEE) features, however, are available only in PHY transceivers implementing and/or supporting the IEEE 802.3az standard, such as 100TX/1000BASE-T PHY transceivers. PHY transceivers implementing legacy Ethernet standards, such as for 100Mbps and 1Gbps PHY transceivers, are limited to utilizing active idle states, in which the majority of the transceivers circuitry may remain powered up, during both active traffic communication (DATA) and idling (IDLE) signaling over the interface between the PHY and higher layers. Furthermore, use of EEE features requires, however, that both sides of the link be compliant with the requirements of LPI or IEEE 802.3az thereof in order to interoperate, and that both physical layer transceivers be capable of supporting LPI.

In various embodiments of the inventions, a physical component, such as one of the PHY components 110, may be configured to implement, support, and/or provide self-adapting dynamic power reduction services. In this regard, self-adaptive dynamic power reduction may comprise autonomous and/or independent implementation and/or use of functions and/or features within the PHY for enabling power consumption reduction in a similar manner as done with EEE functions. In other words, with self-adaptive dynamic power reduction, a PHY component may be operable to independently configure and/or adjust operations of various components of the PHY utilized during data transmission and/or reception, under certain conditions, such as during idling periods. Accordingly, a PHY component may be operable to provide and/or perform such power management operations regardless of whether the higher layers interfacing with the PHY or the link peer support EEE features.

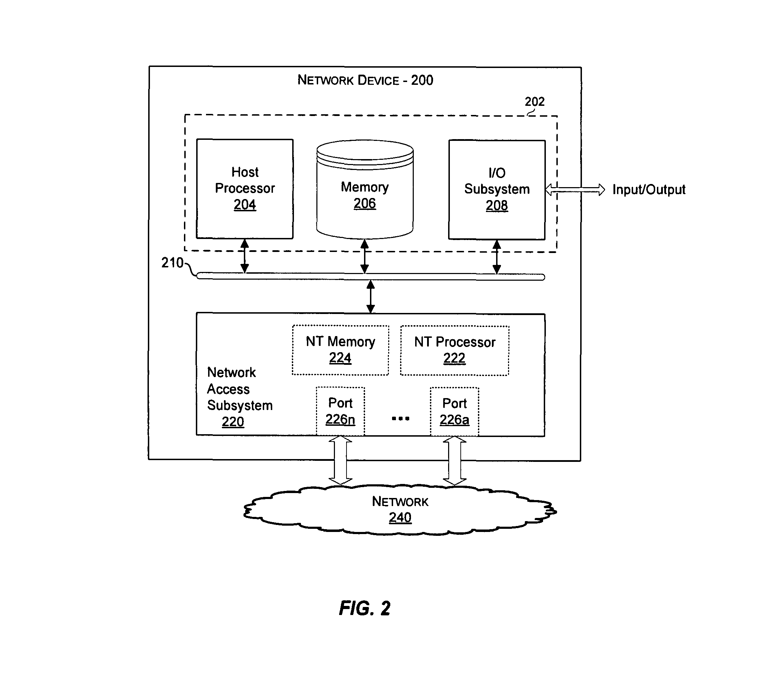

FIG. 2 is a block diagram illustrating an exemplary network device that may support self-adapting dynamic power reduction in physical layer (PHY), in accordance with an embodiment of the invention. Referring to FIG. 2, there is shown a network device 200, a host processor 204, a system memory 206, a system bus 210, an input/output (I/O) subsystem 208, a network access subsystem 220, and a network 240.

The network device 200 may correspond to one or both of the network devices 102 and 104 of FIG. 1. The network device 200 may comprise, for example, the host processor 204, the system memory 206, the system bus 210, the I/O subsystem 208, and/or the network access subsystem 220. In this regard, the host processor 204 may enable executing various tasks and/or applications in the network device 200, and/or may also provide control and/or management of operations of the network device 200. The I/O subsystem 208 may enable user interactions with the network device 200. The network access subsystem 220 may enable communication of data from and/or to the network device 200, during execution of tasks and/or applications in the network device 200 for example. The network device 200 may also comprise other hardware resources (not shown) such as a graphics card and/or a peripheral sound card, for example. The network device 200 may comprise a host environment, which correspond to at least a portion of components of the network device 200 and/or functions or operations thereof, and which may be associated with applications and/or services provided via the network device 200 to users thereof. For example the network device 200 may comprise a host system 202, which may correspond to the host processor 204, the system memory 206, the system bus 210, the I/O subsystem 208, and/or operations or functions thereof.

The host processor 204 may comprise suitable logic, circuitry, interfaces and/or code that may be operable to process data, and/or control and/or manage operations of the network device 200, and/or tasks and/or applications performed therein. In this regard, the host processor 204 may be operable to configure and/or control operations of various components and/or subsystems of the network device 200, by utilizing, for example, one or more control signals. The host processor 204 may also control data transfers within the network device 200. The host processor 204 may enable execution of applications, programs and/or code, which may be stored in the system memory 206 for example.

The system memory 206 may comprise suitable logic, circuitry, interfaces and/or code that enable permanent and/or non-permanent storage and/or fetching of data, code and/or other information used in the network device 200. In this regard, the system memory 206 may comprise different memory technologies, including, for example, read-only memory (ROM), random access memory (RAM), and/or Flash memory. The system memory 206 may store, for example, configuration data, which may comprise parameters and/or code, comprising software and/or firmware, but the configuration data need not be limited in this regard.

The I/O subsystem 208 may comprise suitable logic, circuitry, interfaces, and/or code that may enable inputting and/or outputting of data and/or messages, to support user interactions with the network device 200, to receive user input and/or provide user output. For example, the I/O subsystem 208 may facilitate interactions with the network device 200 via one or more I/O devices, such as a monitor, a mouse, and/or keyboard.

The system bus 210 may comprise suitable logic, circuitry, interfaces, and/or code that may enable exchange of data and/or messages between various components and/or systems in the network device 200. In this regard, the system bus may comprise parallel or serial, and/or internal or external based bus technologies, and/or any combinations thereof. Exemplary system bus interfaces may comprise Peripheral Component Interconnect (PCI), Peripheral Component Interconnect Express (PCI-E), Inter-Integrated Circuit (I²C), Universal Serial Bus (USB), Advanced Technology Attachment (ATA), and/or Small Computer System Interface (SCSI) based interfaces.

The network access subsystem 220 may comprise suitable logic, circuitry, interfaces, and/or code that may be operable to communicate data and/or messages from and/or to the computer system 200. The network access subsystem 220 may comprise, for example, a network interface controller (NIC). The network access subsystem 220 may comprise, for example, a networking processor 222, a networking memory 224, and/or a plurality of ports 226_{A} - 226_{N}. The networking processor 222 may comprise suitable logic, circuitry, interfaces, and/or code for controlling and/or managing operations of the network access subsystem 220. The networking memory 224 may comprise suitable logic, circuitry, interfaces and/or code for dedicated local storage and/or buffering of data within the network access subsystem 220. In this regard, the networking memory 224 may comprise one or more ROM, RAM, Flash, SSD, and/or FPGA devices. Each of the plurality of ports 226_{A} - 226_{N} may comprise suitable logic, circuitry, interfaces, and/or code for providing network interfacing functionality, in the network access subsystem 220, based on one or more networking standards and/or protocols. The plurality of ports 226_{A} - 226_{N} may comprise, for example, Ethernet based ports.

The network access subsystem 220 may support and/or perform, for example, physical (PHY) layer related access, via the plurality of ports 226_{A} - 226_{N}, and/or processing therefor. The network access subsystem 220 may also support and/or perform Media Access Control (MAC) layer related processing (e.g. addressing and/or channel access) corresponding to one or more supported networking standards. In this regard, exemplary network standards may comprise wired based standards, such as Ethernet, Digital Subscriber Line (DSL), Integrated Services Digital Network (ISDN), and/or Fiber Distributed Data Interface (FDDI); or wireless standards, such as WLAN (IEEE 802.11). The network access subsystem 220 may also perform some switching, such as layer 2 (L2) based switching for example, during transmission and/or reception of data packets. The switching supported by the network access subsystem 220, however, need not be limited to L2, and may comprise L2, L3, L4, VLAN, and/or other protocol layers.

The network 240 may comprise a system of interconnected networks and/or devices for exchanging data among a plurality of nodes, based on one or more networking standards, which may enable communication of data, via Ethernet packets for example, between the network device 200 and one or more other devices. Physical connectivity within, and/or to or from the network 240, may be provided via copper wires, fiber-optic cables, wireless links, and/or other standards-based interfaces. The network 240 may correspond to, for example, the external network 140 and/or at least a portion of the switching subsystem 120 of the local network 100, substantially as described with respect to FIG. 1.

In operation, the network device 200 may perform various tasks and/or execute applications based on, for example, preloaded instructions and/or user input, which may be provided via the I/O subsystem 208 for example. The network device 200 may transmit and/or receive packets, such as during performance of tasks and/or execution of applications in the network device 200, for example. In this regard, the network device 200 may communicate packets, which may carry data and/or messages, to and/or from the network 240, via one or more of the ports 226_{A} - 226_{N} for example. For example, the network device 200 may be operable to transmit and/or received Ethernet based packets. For example, the packets may be formatted in accordance with the seven-layer Open Systems Interconnection (OSI) model. For example, the network device 200 may implement, for example, TCP/IP and/or UDP/IP stacks for use in generating transmitted traffic packets and/or in receiving and handling received traffic packets. In this regard, physical layer (PHY) related functions and/or operations and at least a portion of the media access control (MAC) layer related functions and/or operations may be implemented via the network access subsystem 220. The remaining higher layers, comprising layers 3 through 7 of the OSI model for example, may be implemented in and/or provided by host system 202.

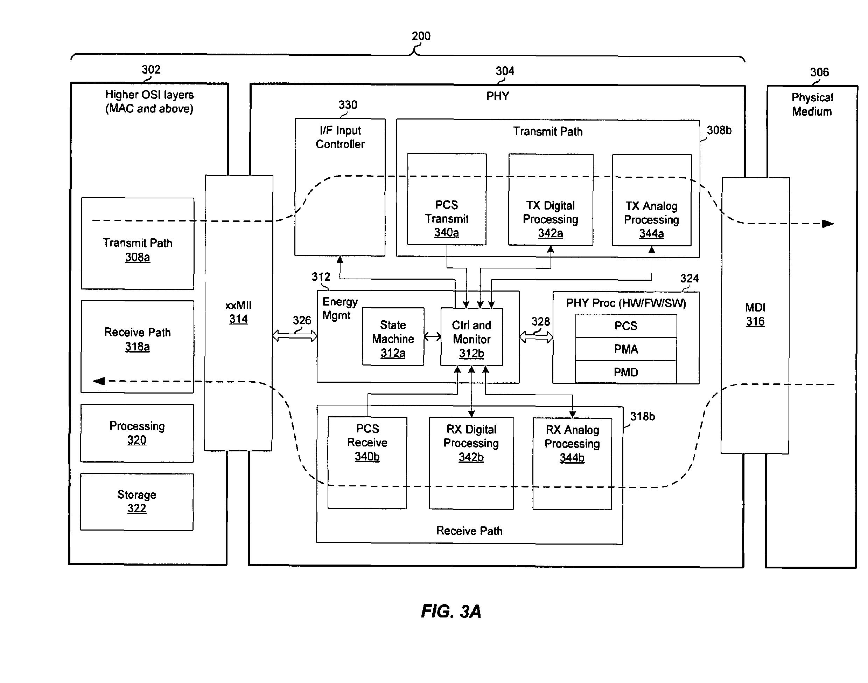

In an exemplary embodiment of the invention, the network access subsystem 220 of the network device 200 may provide physical layer (PHY) based self-adapting dynamic power reduction. In this regard, self-adaptive dynamic power reduction may comprise autonomous implementation and/or use within a PHY component or function of the network access subsystem 220, of power reduction functions and/or features for enabling reducing power consumption in a manner similar to what may be provided by EEE features. In other words, with self-adaptive dynamic power reduction, such PHY component may be operable to independently and/or autonomously configure and/or adjust operations of various components utilized within the component during data transmission and/or reception, under certain conditions, such as during idling periods. Accordingly, a PHY component may be operable to provide and/or perform such EEE features like power reduction operations even when higher layers implemented in the network device 200, including the MAC layer, and link peer(s) communicating with the network device do not implement or support EEE features. The self-adaptive dynamic power reduction services are described in more details with respect to FIG. 3A.

FIG. 3A is a block diagram illustrating an exemplary networking architecture in network device that is operable to provide self-adapting dynamic power reduction asymmetrically in physical layer (PHY) component, in accordance with an embodiment of the invention. Referring to FIG. 3A there is shown a networking architecture 300, which may be implemented in the network device 200, comprising a module 302 representing layers above the physical layer in the OSI model, or portions of the network access layer and higher layers in the TCP/IP model, and a PHY 304. The network device 200 may communicate over a physical medium 306. The network device 200 may be similar to or the same as the link partners 102 and 104. The physical medium 306 may correspond to network 240.

The module 302 may comprise processing module 320 and storage module 322. In this regard, the processing module 320 may correspond to the at least a portion of the host processor 204 and/or the networking processor 222, and/or operations thereof. The storage module 322 may correspond to the at least a portion of the system memory 206 and/or the networking memory 224, and/or operations thereof. Accordingly, the processing module 320 and storage module 322 may correspond to processing and/or storage operations provided and/or performed with respect to handling of layers higher than the physical layer, such as OSI layers 7 through 2. In this regard, processing module 320 may be operable to process data, generate signals, and/or control operation of the module 302 and/or the PHY 304. The storage module 322 may comprise, for example, RAM, ROM, NVRAM, or flash. The storage module 322 may, for example, store instructions that may be executed by the processing module 320, and/or may also, for example, buffer received and/or to-be-transmitted data.

The module 302 may also comprise a portion of transmit and receive paths 308 and 318, shown as transmit path 308a and receive path 318a. In this regard, the transmit path 308 may comprise suitable logic, circuitry, interfaces, and/or code for handling processing and transmitting data. In this regard, data may originate in the higher OSI or TCP/IP layers and be processed as it gets conveyed through the OSI or TCP/IP layers until corresponding physical symbols are transmitted on the physical medium 306. Accordingly, transmission related operations performed by, and/or corresponding to the physical layer (PHY) are shown as portion 308b of the transmit path 308, whereas transmission related operations performed by, and/or corresponding to higher layers, represented by module 302, are shown as portion 308a of the transmit path 308. Although, the transmit path 308 is depicted as separate blocks 308a and 308b, the transmit path 308 may be comprise any number of logical and/or physical components operating at any of the OSI or TCP/IP layers. Similarly, the receive path 318 may comprise suitable logic, circuitry, interfaces, and/or code for receiving and processing data. In this regard, data may be received from the physical medium 306 and may be processed as it is conveyed up to higher OSI or TCP/IP layers. Accordingly, reception related operations performed by, and/or corresponding to the physical layer (PHY) are shown as portion 318b of the receive path 318, whereas reception related operations performed by, and/or corresponding to higher layers, represented by module 302, are shown as portion 318a of the receive path 318. Although, the receive path 318 is depicted as blocks 318a and 318b, the receive path 318 may be comprise any number of logical and/or physical components operating at any of the OSI or TCP/IP layers. Furthermore, although the transmit path 308 and receive path are depicted as separate blocks in FIG. 3A, the two paths may share one or more resources. That is, the separation between the transmit path 308 and the receive path 318 may be physical, logical, and/or a combination thereof.

The PHY 304 may be similar to the PHY component 110 described with respect to FIG. 1. The PHY 304 may comprise the transmit path 308b, the receive path 318b, an energy management (EM) module 312, a physical layer (PHY) processing module 324, and an interface (IF) input controller 332.

The energy management (EM) module 312 may comprise suitable logic, circuitry, interfaces, and/or code that may be operable to support and/or manage power related operations in the PHY 304. The EM module 312 may be operable to control various operations and/or functions of the PHY 304, and/or otherwise process information and generate signals to implement energy control policies, which may comprise energy efficient networking (EEN) related features and/or polices for example. In this regard, the EM module 312 may be operable to interact with, and/or may generate control signals for configuring the transmit path 308b, the receive path 318b, the xxMII 314, and/or the MDI 316, such as for implementing EEN features such as LPI or sub-rating for example. The EM module 312 may additionally, or alternatively, be operable to generate, or control generation of, messages for managing and coordinating implementation of EEN features. In this regard, transitioning from one mode of operation to another may require acceptance, cooperation, or at least awareness by a link partner such that communications are not corrupted. The EM module 312 may also be operable to buffer, or control buffering of received and/or to-be-transmitted data. While the energy management (EM) module 312 is shown to be implemented wholly as a component of the PHY 304 the invention need not be so limited. For example, at least a portion of the EM module 312, and/or at least some of the functions or operations provided thereby, may be implemented and/or performed via other components of the network device 200, such as, for example, the module 302 which may comprise higher OSI layers. In this regard, interactions pertaining to functions provided by the EM module 312 may be may be performed over the xxMII 314.

In an exemplary embodiment of the invention, the EM module 312 may support self-adapting dynamic power reduction in the PHY 304. In this regard, self-adaptive dynamic power reduction may comprise autonomously implementing and/or using power reduction functions independent of operation of higher layers and/or link peers. The EM module 312 may comprise, for example, a state machine module 312a and a control and monitoring module 312b, which may be utilized to facilitate providing self-adapting dynamic power reduction. In this regard, the state machine module 312a may be operable to maintain and/or run one or more state machines that may be utilized in conjunction with operations of the EM module 312. For example, the state machine module 312a may maintain state machines used in conjunction with self-adapting dynamic power reduction services provided in the PHY 304. In this regard, the state machines may correspond to power reduction policies, which may define, for example, applicable operation modes and/or operational criteria or parameters pertaining to one or more components in the PHY 304.

The control and monitoring module 312b may be operable to interact with components of the PHY 304, to facilitate performing various energy related functions. For example, the control and monitoring module 312b may be operable to request and receive status information, and/or to communicate control signals that enable implementing certain energy policies, such as during self-adapting dynamic power reduction services.

The PHY processing module 324 may comprise suitable logic, circuitry, interfaces, and/or code that may be operable to perform and/or implement various physical layers related operations and/or functions. In this regard, the PHY processing module 324 may enable implementing various sublayers of physical layer, (PHY), such as the physical coding sublayer (PCS), the physical media attachment (PMA) sublayer, and/or the physical media dependent (PMD) sublayer, and/or performing functions and/or operations related thereto.

The PHY transmit path 308b may comprise suitable logic, circuitry, interfaces, and/or code for handling processing and transmitting data in the PHY 304. In this regard, the PHY transmit path 308b may comprise PCS transmit module 340a, transmit (Tx) digital processing module 342a, and Tx analog processing module 344a. The PCS transmit module 340a may be operable to perform certain PCS related functions that may be required for enable transmission of data in the form of physical signals. The PCS transmit module 340a may perform 8b/10b encoding for example. The Tx digital processing module 342a may perform digital aspects of signal processing operations during communication of signals via the physical medium 306. The Tx analog processing module 344a may perform analog aspects of signal processing operations during communication of signals via the physical medium 306.

The PHY receive path 318b may comprise suitable logic, circuitry, interfaces, and/or code for handling processing and reception of data in the PHY 304. In this regard, the PHY receive path 318b may comprise PCS receive module 340a, receive (Rx) digital processing module 342b, and Rx analog processing module 344b. The PCS receive module 340b may be operable to perform certain PCS related functions that may be required for enable reception of data in the form of physical signals. The PCS receive module 340b may perform 8b/10b decoding for example. The Rx digital processing module 342b may perform digital aspects of signal processing operations during handling of signals received via the physical medium 306. The Rx analog processing module 344b may perform analog aspects of signal processing operations during handling of signals received via the physical medium 306.

Interactions between the PHY 304 and higher layers in module 302, particularly the MAC layer, may be performed via a media independent interface standard (xxMII) based interface 314. In this regard, PHY 304 may utilize the xxMII 314 to receive and/or convey data or control signals, to and/or from the corresponding MAC Layer in module 302 for example. The PHY 304 may utilize a media dependent interface (MDI) 316 for conveying and/or receiving data to and/or from link peer via physical medium 306. In this regard, data communicated via the physical medium may be formatted in accordance with specific requirements particular to the physical medium 306.

The IF input controller 330 may comprise suitable logic, circuitry, interfaces, and/or code for handling data received via the xxMII 314 from the MAC layer. In this regard, the IF input controller 330 may own the data transmit portion of the xxMII 314, which may be utilized during forwarding of data to-be-transmitted from the transmit path 308a in module 302. The IF input controller 330 may receive the data from the xxMII 314 and may forward it to the PHY transmit path 308b. In an exemplary aspect of the invention, the IF input controller 330 may control timing of forwarding of data from xxMII 314 to the PHY transmit path 308b in accordance with energy related policies that may be implemented via the EM module 312. In this regard, the IF input controller 330 may be operable to buffer the data to enable delaying its forwarding between the xxMII 314 and the transmit path 308b.

In operation, the PHY 304 may be operable to provide and/or support autonomous use of efficient energy management functions, which may enable reduction in energy consumption within the PHY 304 during low link utilization even when the higher layers in module 302 and/or link peers do not implement or support EEE features or functions. The PHY 304 may provide, for example, self-adapting dynamic power reduction services, which may be implemented as Adaptive Power Management (APM) mechanisms based on low-link utilization. In this regard, the EM module 312 may, via the control and monitoring module 312b for example, monitor (326) the interface between the PHY 304 and the MAC layer in module 302, which may comprise the xxMII 314 in Ethernet based implementations. Based on monitoring of the xxMII 314, the state machine module 312a may be utilized to determine if and/or when to transition the PHY 304 into and/or out of energy savings states.

In addition to monitoring the MAC interface (xxMII 314), the control and monitoring module 312b may also monitor the status of various components of the PHY 304, and/or may be utilized to control or manage these components. In this regard, the control and monitoring module 312b may provide the information from the state machine module 312a to components of the PHY 304 which are being managed in accordance with power reduction policies implemented by the state machine module 312a, and/or it may obtain status information from these components and provide it to the state machine module 312a for use execution of the power reduction policies. For example, the control and monitoring module 312b may monitor and/or interact with (328) the PHY processing module 324, to obtain information pertaining to the PCS, the PMA, and/or the PMD sublayers, and/or to send control signals to enable controlling and/or modifying functions related thereto. Similarly, the control and monitoring module 312b may monitor and/or interact with the PHY transmit path 308b and/or the PHY receive path 318b, to enable obtaining information therefrom and/or sending control signals thereto. In this regard, the control and monitoring module 312b may be operable to adjust operation modes of each of the Tx digital processing module 342a, the Tx analog processing module 344a, the Rx digital processing module 342b, and/or the Rx analog processing module 344b, based on power reduction policies for example.

Accordingly, the control and monitoring module 312b may be utilized, in conjunction with the state machine module 312a and/or based on control policies executed thereby, for generating and/or sending control signals to enable and/or disable low power modes in these components. Furthermore, top level logic, such as the PHY processing module 324, may provide decoding or encoding of these signals. For example, in instances of low link utilization, the power policies implemented via the state machine module 312a may enable reducing power use by such components, by turning off and/or deactivating these components, and/or by transitioning them to lower power states where only a portion of functions of these components remain active. The state machine module 312a may continue to monitor (326) the traffic activity. In this regard, in instance where traffic is detected, components previously transitioned to low power modes, may be partially or fully transitioned to active power modes to enable handling that traffic.

In an exemplary embodiment of the invention, different levels of energy savings may be achieved by adaptively and/or variably controlling power modes of different components of the PHY 304. In this regard, the power reduction policies implemented by the state machine module 312a may incorporate varying levels of power savings for analog or digital circuitry which can be a trade-off between most energy savings versus fastest recovery time. For example, during normal operations in the PHY 304, there may be three different types of traffic scenarios comprising Tx-only traffic, Rx-only traffic, and Rx-and-Tx traffic. In Tx-only traffic, only data transmission via the PHY 304 may occur, with traffic activity occurring only on the transmit side of the xxMII 314. In this regard, in instances where the certain components of the transmit path 308a may be in a low power mode, the data to-be-transmitted may be buffered, via the IF input controller 330, to delay handling of the data being sent over the xxMII 314 in order to allow sufficient time for the recovering and/or reactivating of these components. Components of the receive path 318b may be kept at reduced-power or completely powered down state, depending on the traffic statistics and/or information for example. In Rx-only traffic scenarios, only data reception via the PHY 304 may occur, with traffic activity occurring only on the receive side of the xxMII 314. In this regard, various receive related status signals, corresponding to Rx digital processing module 342b and/or the Rx analog processing module 344b, may be monitored along with PCS signals. In this scenario, no buffering and/or delaying may be necessary since receive path 318b may be fully activated before data reception is perform. Components of the transmit path 308b may be kept at reduced-power or completely powered down state. In Tx-and-Rx traffic scenarios, both data transmission and reception occur, and the PHY 304 may transition to full power mode.

In some instances, self-adapting dynamic power reduction policies implemented in the PHY 304, via the state machine 312a for example, may enable various power savings in a plurality of different stages. In an exemplary embodiment of the invention, an exemplary self-adapting dynamic power reduction policy may incorporate three-mode model. In the first (green) mode, only the Tx analog processing module 344a and the Rx analog processing module 344b may be active but functioning at low operating level, with some non-essential functions therein being shut down or deactivated. Accordingly, this mode may result in low power savings, but also may require minimum recovery time for transitioning the PHY 304 back to full activity. In the second (sleep) mode, in addition to what is done in the green mode, the Tx digital processing module 342a, the Tx analog processing module 344a, the Rx digital processing module 342b, and the Rx analog processing module 344b may be partially powered down. Accordingly, this mode may yield moderate power savings at the expense of longer transition (recovery) time compared to the first (green) mode necessitated by the need to transition all four components to full activity. In the third (deep sleep) mode, the Tx digital processing module 342a, the Tx analog processing module 344a, the Rx digital processing module 342b, and the Rx analog processing module 344b may be completely powered down. Accordingly, the deep sleep mode may yield the most power savings at the expense of longest transition (recovery) time.

To support progressive transitions between the different modes, a plurality of timers or counters may be implemented, via the state machine module 312b for example. In this regard, a first timer T1 may be associated with the green mode, wherein expiry of timer T1 triggers to the green mode. A second timer T2 may be associated with the sleep mode, wherein the timer T2 may be initiated after transition to the green mode, and expiry of timer T2 triggers a transition from the green mode to the sleep mode. A third timer T3 may be associated with the deep sleep mode, wherein the timer T3 may be initiated after transition to the sleep mode, and expiry of timer T3 triggers a transition from the sleep mode to the deep sleep mode.

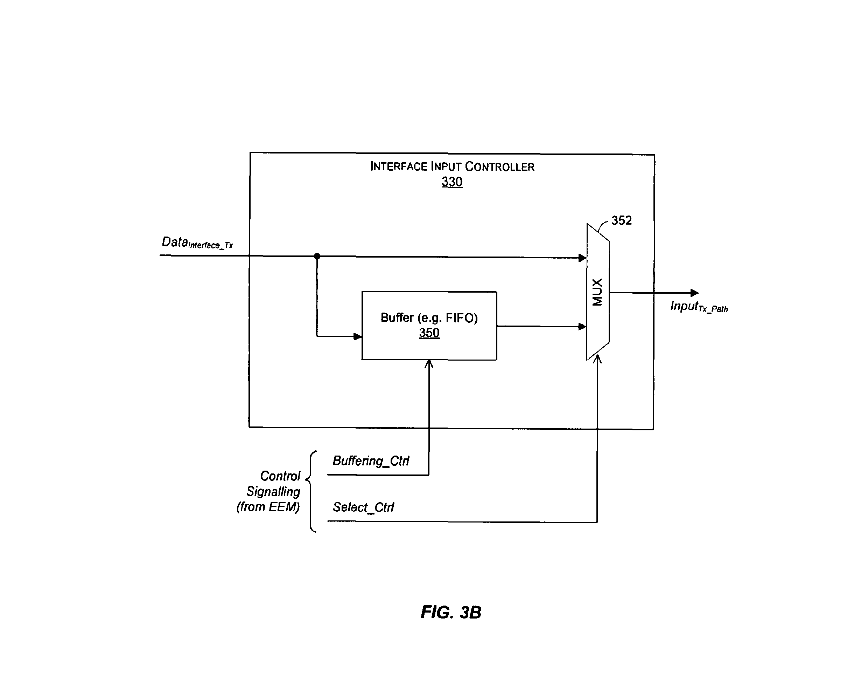

FIG. 3B is a block diagram illustrating an exemplary interface input controller, in accordance with an embodiment of the invention. Referring to FIG. 3B, there is shown the IF input controller 330, which may comprise a buffer 350 and a multiplexer (Mux) 352.

The buffer 350 may comprise suitable logic, circuitry, interfaces and/or code that may be operable to buffer data inputted into the buffer 350. The data buffered via the buffer 350 may comprise Datatn_{Interface_Tx}, which may correspond to data to-be-transmitted, which may be conveyed from module 302 via the transmit portion of the xxMII 314. In this regard, the buffer 350 may be utilized to enable use of the IF input controller 330 in delaying forwarding of Data_{Interface_Tx} to the transmit path 308b, by storing it for a certain duration before it may be outputted to the Mux 352 for example. The buffering duration, which may correspond to required delay, may be configurable, based on a control signal, buffering_ctrl, which may be generated by the control and monitoring module 312b of the EM module 312 in the PHY 304 for example. The buffer 350 may be implemented as a first-in-first-out (FIFO) queue.

The Mux 352 may comprise suitable logic, circuitry, interfaces and/or code that may be operable to select an output from a plurality of inputs, based on one or more control signals. In this regard, the Mux 352 may select an output from two inputs comprising Data_{Interface-Tx}, as it is being received from the xxMII 314, and the output of the buffer 350. The Mux 352 may be driven, in selecting outputs, by a control signal, select_ctrl which may be generated by control and monitoring module 312b of the EM module 312 in the PHY 304.

In operation, the IF input controller 330 may be utilized for handling data to-be-transmitted received via the xxMII 314, to control forwarding that data to the PHY transmit path 308b. In this regard, the IF input controller 330 may be utilized to control timing of forwarding the data to the transmit 308b - i.e. either immediately or after some delay. This may be achieved by controlling, for example, selection of values to be assigned to the Input_{Tx_Path}, which may correspond to the input to the PHY transmit path 308b. In this regard, the IF input controller 330 may enable delaying handling of the transmit data, by temporarily storing it in the buffer 350, to enable activating one or more components of the transmit path 318b which may not be available under certain conditions and/or modes in accordance with energy efficient policy being implemented by the EM module 312. The duration of buffering, which may correlate to duration of delay, may be configurable, based on control signal buffering_ctrl for example. To facilitate such delayed handling, the Mux 352 may be configured to select the output of the buffer 350 to be the Input_{Tx_path}, whereas prompt forwarding of data to the transmit path 308b may be achieved by configuring the Mux 352 to select the input data Data_{lnterface_Tx} directly. In this regard, the Mux 352 may perform the selection based on the control signal select_ctrl. The select_ctrl control signal may be set to, for example, '1' to indicate that Interfaceᵢₙₚᵤₜ is to be selected, or it may be set to '0' to indicate that output of the buffer 350 may be selected instead.

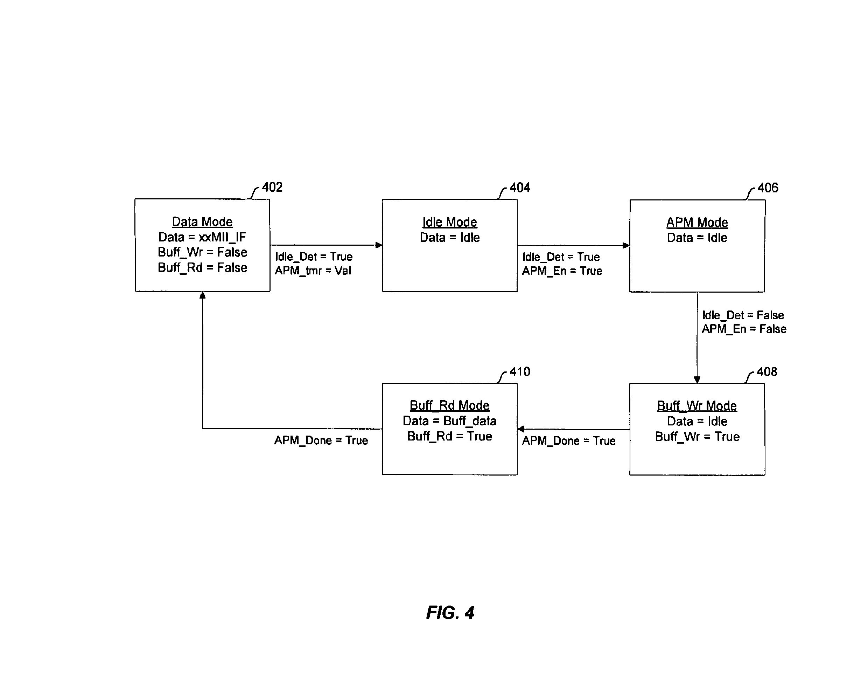

FIG. 4 is a flow chart that illustrates exemplary transmit (Tx) based power control policy for use during self-adapting dynamic power reduction servicing in a physical layer (PHY), in accordance with an embodiment of the invention. Referring to FIG. 4, there is shown flow chart 400, comprising a plurality of operational mode states, and transitions therebetween, which may correspond to a power reduction policy that may be applied to, for example, transmit path within physical layer (PHY), such as PHY 304. In this regard, the power reduction policy represented by flow chart 400 may be implemented via the state machine module 312a of the energy management (EM) module 312 of the PHY 304.

Various control parameters may be utilized to define aspects of various operations and/or function pertaining to data transmission and/or power management in the PHY. In this regard, at least some of the control parameters may be set and/or modified in each of the operation modes and/or during transitions between these modes. For example, a 'Data' control parameter may define status and/or source of data handled and/or utilized by the transmit path 308b. The 'Data' control parameter may be set to "IF_xxMII" to indicate that the data to-be-transmitted is being read directly from the xxMII 314. The 'Data' control parameter may be set to "Idle" to indicate that no data would be handled or forwarded through the transmit path. The 'Data' control parameter may be set to "Buff_data" to indicate that the data to-be-transmitted is read from an internal buffer in the PHY, such as buffer 350. A 'Buff_Wr' control parameter may be a Boolean parameter that is set to indicate whether buffering of data within internal buffer, such as buffer 350, is done or not. Similarly, a 'Buff_Rd' control parameter may be a Boolean parameter that is set to indicate whether reading of data from internal buffer, such as buffer 350, is done or not. An 'Idle_Det' control parameter may be a Boolean parameter that is set to indicate whether data transmission idling has been detected or not. In this regard, the 'Idle_Det' control parameter may be set to "true" whenever there is a pause in data transmission, and may be set to "false" during transmission of data.

Some of the control parameters may be utilized in conjunction with adaptive power management operations. For example, an 'APM_tmr' may be utilized as timing control to trigger running of adaptive power reduction functions. In this regard, the 'AMP_tmr' may be set to a value "Val" whenever the 'Idle_Det' control parameter is changed from "false" to "true." The value "Val" maybe configurable and/or programmable. In this regard, the value "Val" may be a count of consecutive IDLES after which adaptive power management functions may be initiated. An `AMP_En' control parameter may be a Boolean parameter that is set to indicate whether adaptive power reduction is enable ("true") or not ("false"). In this regard, the 'AMP_En' control parameter may be set to "true" when the AMP timer, as defined by the 'AMP_tmr' value expires. An 'AMP_Done' control parameter may be a Boolean parameter that is set to indicate completion of adaptive power reduction ("true.")

The control parameters may be utilized for adjusting and/or setting control signals generated and/or transmitted by the EM module 312. For example, the control signal select_ctrl may be set based on value of the "Data" control parameter. In this regard, the control signal select_ctrl may be set such that the Mux 352 may select the input directly when 'Data' is set to "IF_xxMII" and to select output of the buffer 350 when 'Data' is set to "Buff_data."

In the data mode 402, the transmit path 308b may be operable to support and/or perform immediate transmission of data received from higher layers in module 302, such as the MAC layer, via the xxMII 314 for example. In this regard, to facilitate proper and immediate handling of data conveyed via xxMII 314 by MAC layer, the 'Data' control parameter may be set to "IF_xxMII." Furthermore, both of 'Buff_Wr' and 'Buff_Rd' control parameters are set to "false" to ensure that no buffering of data is performed or any reading of data from buffer 350 is done.

The idle mode 404 may correspond to idle periods, such as when no data is received from the xxMII 314. In this regard, during transition from the data mode 402 to the idle mode 404, the 'Idle_Det' control parameter may be set to "true." Furthermore, during transition from the data mode 402 to the idle mode 404, 'APM_tmr' control parameter may be set, to value "Val," to enable triggering adaptive power management functions after some preconfigured delay. For example, the adaptive power management functions may be initiated after a minimum count of consecutive IDLES. This may ensure that the transmit path 308b, or components thereof, are not shut down, deactivated, and/or transitioned to low power states, during short and/or deliberate pauses in the transmissions.

In the APM mode 406, adaptive power reduction functions may be performed, in which at least some of the components of the transmit path 308b may be shut down, deactivated, and/or transitioned to low power states where at least some functions thereof may be turned off. During the transition from the Idle mode 404 to the AMP mode 406, the 'Idle_Det' control parameter may remain set to "true," indicating the idling continues, and the 'AMP_En' control parameter may be set to "true," to indicate that adaptive power management functions may be initiated.

In the Buff_Wr mode 408, data to-be-transmitted that may be received via the xxMII 314 is buffered within the PHY 304, via the buffer 350 for example. In this regard, the transition to the Buff_Wr mode 408 may be performed when the data to-be-transmitted is received during the APM mode 406. During the transition from the AMP mode 406 to the Buff_Wr mode 408, the 'Idle_Det' control parameter may be set to "false," indicating that idling ceased, and 'AMP_En' control parameter may be set to "false," indicating that adaptive power management functions are suspended. During the Buff_Wr mode 408, the 'Buff_Wr' control parameter is set to "true," indicating that the data to-be-transmitted is written into buffer 350. The data buffering may be performed to enable transitioning the transmit path 308b, at least some components such that data transmission may be performed. This may comprise powering on, reactivating, and/or transitioning from low power states. The 'AMP_Done' control parameter may be set to "true," to indicate that all components that may be been affected by the adaptive power management functions may be fully restored into full activity.

In the Buff_Rd mode 410, data may be read from the buffer 350 for transmission. In this regard, during the Buff_Rd mode 410 the 'Buff_Wr' control parameter may be set to "true," indicating that data reads from buffer 350 is permitted, and 'Data' control parameter may be set to "Buff_data," indicating that the data to-be-transmitted is read from buffer 350. After all the data in buffer 350 is read, a transition to the data mode 402 may be perform, wherein normal handling of data to-be-transmitted may be done.

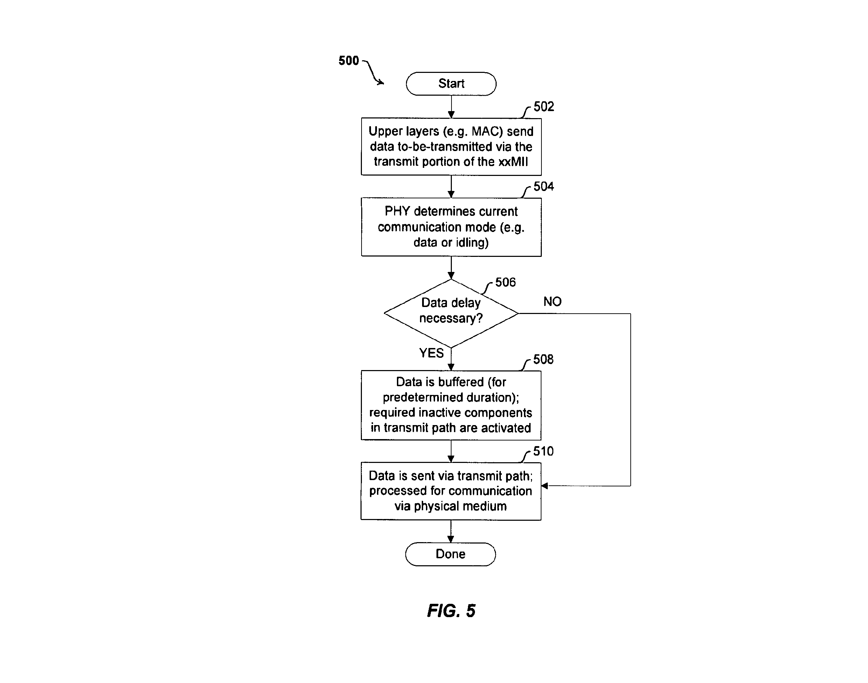

FIG. 5 is a flow chart that illustrates exemplary steps for handling data transmission in a physical layer (PHY) when a self-adapting dynamic power reduction is performed by the PHY, in accordance with an embodiment of the invention. Referring to FIG. 5, there is shown a flow chart 500 comprising a plurality of exemplary steps that may be performed to enable self-adapting dynamic power reduction servicing in a physical layer during networking.

In step 502, data to-be-transmitted may be sent by higher layers, such as a MAC layer for example, via the transmit portion of an interface, such as the xxMII 314, between the MAC and a physical layer (PHY) component, such as the PHY 304. In step 504, the physical layer (PHY), such as PHY 304, may determine current communication mode, which may comprise data or idling for example. In step 506, a determination of whether delaying data is needed may be performed. In instances where delaying data is not needed, the exemplary steps may skip directly to step 510. Returning to step 506, instances where delaying data is not needed, the exemplary steps may proceed to step 508. In step 508, the data may be buffered, via the buffer 352 for example. In this regard, the duration of buffer may be set to predetermined value, to allow for performing necessary operations that may enable transmission of the data. This may comprise reactivating required components in transmit path which may have been previously deactivated, shut down, and/or configured to run in power saving mode. In step 510, the data may be sent via transmit path; and may be processed to enable communication via physical medium.

Various embodiments of the invention may comprise a method and system for self-adapting dynamic power reduction mechanism for physical layer devices in packet data networks. The PHY 304 may provide self-adapting power reduction in the network device 200 based on monitoring of activity associated with an interface between the PHY 304 and remaining components of the network device 200. Power management operations of the PHY 304 may then be configured and/or adjusted based on that monitoring, wherein these power management operations may be performed autonomously within the PHY 304, independent of other components of the network device 200 and/or link peers of the network device 200. The PHY 304 may provide Ethernet physical layer functions and/or operations, and/or may be operable to support Energy Efficient Ethernet (EEE) based features. The power management performed based on monitoring of the interface may comprise transitioning one or more components of the PHY 304, such as the PHY transmit path 308b and/or PHY receive path 318b, and/or components thereof, to power saving modes. The transitions to the power saving modes may be triggered based on a plurality of transition criteria, which may comprise of a timer or a counter that tracks idle periods during communication activity associated with the PHY 304. The power management may also comprise modifying power related parameters and/or settings associated with one or more of a plurality of subcomponents of the PHY 304. The modification may comprise modifying power related configuration comprises shutting down and/or reducing activity of at least a portion of the one or more of the plurality of subcomponents of the PHY 304. The monitored interface may comprise a Media Independent Interface (MII) based interface, such as the xxMII 314, which may be utilized during interactions between the PHY 304 and a MAC layer in the module 302. In instances where the monitored activity comprises outbound traffic, outbound data comprising data to-be-transmitted conveyed via the xxMII 314, may be buffered via the I/F input controller 330 when one or more components of the PHY 304, such as the PHY transmit path 308b and/or components thereof, which may be operable to support transmission of the outbound traffic may be unavailable due to the power management operations. The buffering may be configured to last for a sufficient time that to allow activating or reactivating these components, by adjusting duration of buffering within the buffer 350 for example.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for self-adapting dynamic power reduction mechanism for physical layer devices in packet data networks.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method, comprising:
in a network device:
monitoring traffic activity associated with an interface between a PHY component of said network device and remaining components of said network device, wherein said traffic activity comprises inbound and/or outbound traffic;
and
configuring power management operations of said PHY component based on said monitoring.

2. The method according to claim 1, wherein said PHY is an Ethernet PHY.

3. The method according to claim 2, wherein said Ethernet PHY supports energy efficient Ethernet (EEE) operations.

4. The method according to claim 1, wherein said interface comprises a Media Independent Interface (MII) based interface.

5. The method according to claim 1, comprising determining when outbound traffic is received via said interface, whether at least one subcomponent of said PHY component is unavailable due to said power management operations, said at least one subcomponent of said PHY component being operable to support transmission of said outbound traffic.

6. The method according to claim 5, comprising buffering at least a portion of said outbound traffic when said at least one subcomponent of said PHY component is unavailable to enable activating said at least one subcomponent of said PHY component.

7. The method according to claim 1, comprising transitioning one or more of a plurality of subcomponents of said PHY component to one or more power saving modes during power management operations.

8. The method according to claim 7, comprising triggering said transitions to said one or more power saving modes based on a plurality of transition criteria, wherein said transition criteria comprises expiry of at least one configurable timer.

9. The method according to claim 1, comprising modifying power related parameters and/or settings associated with one or more of a plurality of subcomponents of said PHY component.

10. The method according to claim 9, wherein said modifying of power related configuration comprises shutting down and/or reducing activity of at least a portion of said one or more of said plurality of subcomponents of said PHY component.

11. A system, comprising:
one or more circuits for use in a network device, said one or more circuits being operable to:
monitor traffic activity associated with an interface between a PHY component of said network device and remaining components of said network device, wherein said traffic activity comprises inbound and/or outbound traffic;
and
configure power management operations of said PHY component based on said monitoring.

12. The system according to claim 11, wherein said PHY is an Ethernet PHY.

13. The system according to claim 12, wherein said Ethernet PHY supports energy efficient Ethernet (EEE) operations.

14. The system according to claim 11, wherein said interface comprises a Media Independent Interface (MII) based interface.

15. The system according to claim 11, wherein said one or more circuits are operable to determine when outbound traffic is received via said interface, whether at least one subcomponent of said PHY component is unavailable due to said power management operations, said at least one subcomponent of said PHY component being operable to support transmission of said outbound traffic.
